# EUROPEAN PATENT APPLICATION

(11) **EP 3 177 012 A1**
(43) Date of publication of application: **07.06.2017**
(21) Application number: 15465563.3
(22) Date of filing: 03.12.2015
(51) Int. Cl.: H04N 13/02

(54) **CAMERA SYSTEM FOR A VEHICLE**

(71) Applicant: Continental Automotive GmbH, 30165 Hannover (DE)
(72) Inventor: Son, Andrei, 300588 Timisoara (RO)
(74) Representative: Reuter, Andreas

(57) **Abstract**

The invention relates to a stereo camera system (1) for a vehicle. The stereo camera system (1) comprises a right camera (2), a left camera (3).The right camera (2) and the left camera (3) are arranged at a distance (a) such that the right camera (2) can be arranged in an upper-central part of a windshield of the vehicle and the left camera can be positioned in an upper-left corner of the windshield.

## Description

The invention relates to a camera system, in particular a stereo camera system for a vehicle, e.g. a car or a truck. More particular the invention relates to a camera system, e.g. a stereo camera system for an Advanced Driver Assistance System (ADAS) of a vehicle.

Camera systems, in particular stereo camera systems can be used in a vehicle to detect a region around the vehicle, especially on a lane adjacent to the lane on which the vehicle is driving. In case the vehicle is driving behind a second vehicle the minimum distance to the second vehicle must be high enough such that the cameras of the system still can detect incoming traffic on the adjacent lane, especially the left lane (this distance is referred to "minimum distance" in the following). Known stereo camera systems have the problem that the minimum distance limits the operational range in which traffic on the adjacent lane, especially the left lane respectively the lane on which oncoming traffic has to be expected, can be detected properly.

It is thus an object of the present invention to provide a camera system, e.g. a stereo camera system for an ADAS of a vehicle which reduces the minimum distance without affecting a detection of incoming traffic on the adjacent lane, especially on the left lane.

The problem is solved by the subject matter according to the independent claims. The dependent claims, the following description and the drawings show preferred embodiments of the invention.

The stereo camera system for a vehicle according to the present invention comprises a right camera, a left camera, wherein the right camera and the left camera are arranged at a distance such that the right camera can be arranged in an upper-central part of a windshield of the vehicle and the left camera can be positioned in an upper-left corner of the windshield. Such a distance can e.g. be greater than 20 cm.

The cameras can be arranged parallel such that outer limits of their detection ranges also run parallel to each other. The detection ranges are overlapping each other more far away from the hardware element compared to a conventional stereo camera system which cameras are arranged nearer to each other. As a result, the overall detection area of the right camera and the left camera, especially in the horizontal line can be increased. Thus, it is an advantage of the stereo camera system according to the present invention that a field of view is larger than that of currently used stereo camera systems. Closely linked to the first advantage, the stereo camera system for a vehicle according to the present invention also enables that the minimum distance can be reduced without affecting the detection of incoming traffic on an adjacent lane, especially on the left lane respectively the lane on which oncoming traffic has to be expected.

The stereo camera system can comprise a hardware element, e.g. an elongated hardware element, wherein the right camera and the left camera are arranged in the hardware element. Alternatively, the right camera and the left camera can each comprise their own hardware element which can be placed on a windscreen of the vehicle, wherein the right camera and the left camera respectively their hardware elements can be interconnected with wires.

According to an embodiment of the stereo camera system for a vehicle according to the present invention the right camera and the left camera are arranged at a distance of 1 m. For example, the right camera and the left camera can be arranged in the hardware element at a distance of 1 m. This can lead to an improvement of the minimal distance of approximately 6 m. Further, the field of view can be increased by approximately 23%, wherein a potential captured width of the environment in the horizontal line can be 6 m instead of 4.8 m.

The windshield for a vehicle according to the present invention comprises a stereo camera system according to the present invention, wherein the right camera is arranged in an upper-central part of the windshield and the left camera is positioned in an upper-left corner of the windshield. In these positions both cameras are in an area which can be wiped by at least on wiper of the windshield and the increased field of view can be used to detect oncoming traffic on a lane left to the vehicle comprising the stereo camera system according to the present invention.

The vehicle according to the present invention comprises a windshield according to the present invention.

According to another aspect of the invention a windshield for a vehicle is disclosed, wherein the windshield comprises a stereo camera system which comprises a right camera and a left camera, wherein the right camera and the left camera are arranged in an upper-left corner of the windshield. This configuration enables that a large area of a lane left to the one on which the vehicle is driving can be detected while enabling a particularly low minimum distance. The distance between the left camera and the right camera can be like that of conventional camera systems, e.g. about 20 cm. The stereo camera system can comprise a hardware element, e.g. an elongated hardware element, wherein the right camera and the left camera are arranged in the hardware element. Alternatively, the right camera and the left camera can each comprise their own hardware element, wherein the right camera and the left camera respectively their hardware elements can be interconnected with wires.

According to still another aspect of the invention a windshield for a vehicle is provided, wherein the windshield comprises a camera, wherein the camera is arranged in an upper-left corner of the windshield. In other words, a mono camera system is placed in an upper-left corner of a windshield. In this position of the windshield the single camera is in an area which can be wiped by a wiper of the windshield. This configuration enables that a large area of a lane left to the one on which the vehicle is driving can be detected while enabling a particularly low minimum distance. The windshield can comprise a hardware element, wherein the camera is arranged in the hardware element.

In the following description exemplary embodiments of the invention are explained with reference to the accompanying drawing in which
- Fig. 1: shows a perspective view of an exemplary embodiment of a stereo camera system according to the present invention,
- Fig. 2: a schematic back view of a windshield comprising the stereo camera system as per Fig. 1,
- Fig. 3: a schematic plan view of a vehicle with an increased minimal distance and comprising the windshield as per Fig. 2,
- Fig. 4: a schematic plan view of a vehicle with an increased field of view and comprising the windshield as per Fig. 2,
- Fig. 5: a schematic back view of another windshield according to an embodiment of the present invention and
- Fig. 6: a schematic back view of still another windshield according to an embodiment of the present invention.

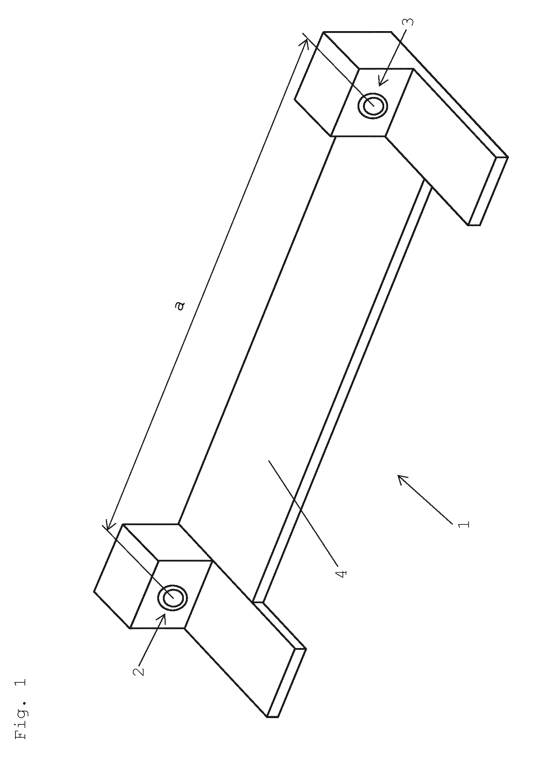

Fig. 1 shows a stereo camera system 1 comprising a right camera 2, a left camera 3 and an elongated hardware element 4. The right camera 2 and the left camera 3 are arranged in the hardware element 4 at a distance a of more than 20 cm, for example 1 m.

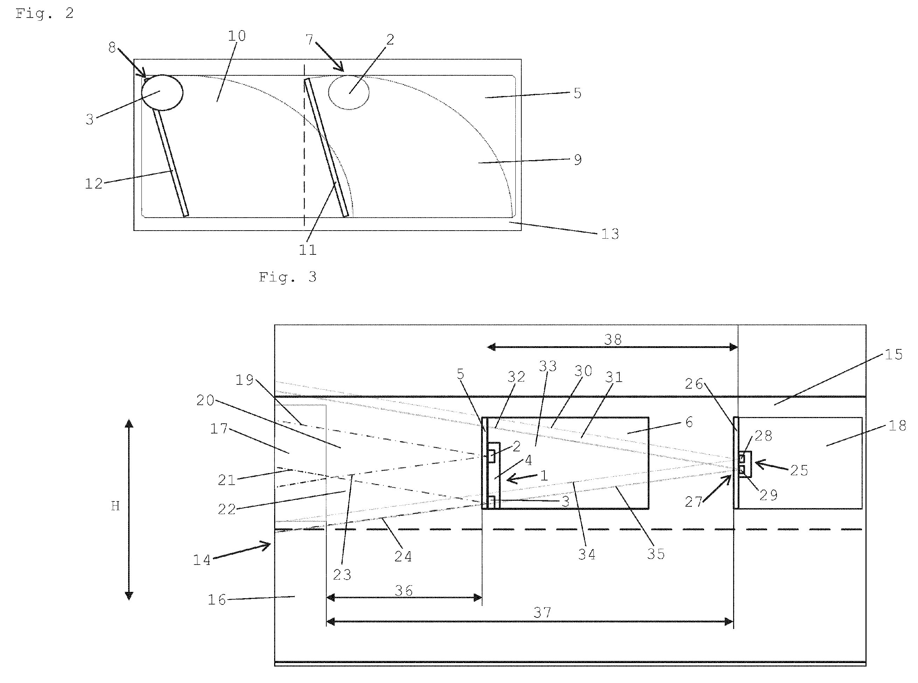

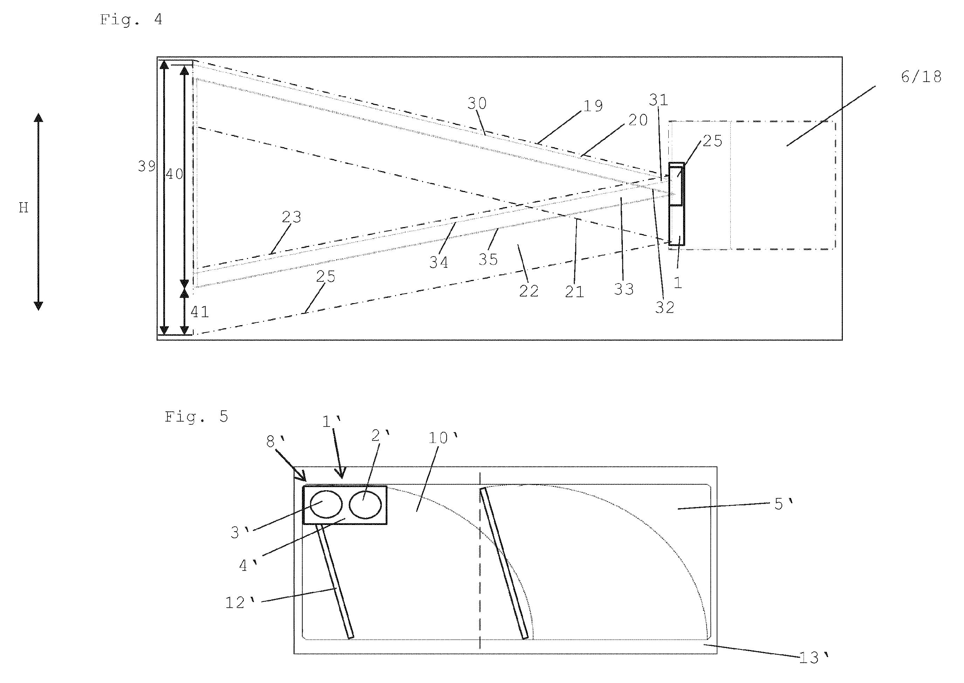

Fig. 2 shows a transparent windshield 5 for a vehicle in form of a car 6 shown in Figs. 3 and 4. The stereo camera system 1 as per Fig. 1 is attached to the windshield 4 from the inside, wherein for the purpose of simplicity the hardware element 4 is not shown in Fig. 2, wherein the right camera 2 is arranged in an upper-central part 7 of the windshield 5 and the left camera 3 is positioned in an upper-left corner 8 of the windshield 5. In these positions 7, 8 both cameras 2, 3 are in wiping areas 9, 10 which can be wiped by a right wiper 11 of the windshield 5 respectively a left wiper 12 of the windshield 5. The windshield 5 is mounted in a frame 13.

Fig. 3 shows the car 6 equipped with the windshield 5 as per Fig. 2 driving on a street 14 with a right lane 15 and a left lane 16, wherein the car 6 is driving on the right lane 15. A second vehicle in form of a truck 17 is driving in front of the car 6 on the right lane 15 and a third vehicle in form of second car 18 without a stereo camera system according to the present invention is driving behind the car 6 on the right lane 15.

As can be seen especially in Figs. 3 and 4 the cameras 2, 3 are arranged parallel in the hardware element 4 such that a right outer limit 19 of a detection range 20 of the right camera 2 runs parallel to a right outer limit 21 of a detection range 22 of the left camera 3. Similar, a left outer limit 23 of the detection range 20 of the right camera 2 runs parallel to a left outer limit 24 of the detection range 22 of the left camera 3. The detection areas 20, 22 are three-dimensional although only shown as planes in Figs 3 and 4.

Figs. 3 and 4 also show that the second car 18 is equipped with a conventional stereo camera system 25 attached to a windshield 26 of the second car 18, more specific in an upper-central part 27 of the windshield 26. The camera system 25 of the second car 18 comprises a right camera 28 and a left camera 29. A right outer limit 30 of a detection range 31 of the right camera 28 runs parallel to a right outer limit 32 of a detection range 33 of the left camera 29. Similar, a left outer limit 34 of the detection range 31 of the right camera 28 runs parallel to a left outer limit 35 of the detection range 33 of the left camera 29. The detection areas 31, 33 are three-dimensional although only shown as planes in Figs 3 and 4.

As can be seen especially in Fig. 3, the stereo camera system 1 according to the present invention in the car 6 enables that a minimum distance 36 can be reduced compared to a minimum distance 37 of the common stereo camera system 25 in the second car 18 without affecting the detection of incoming traffic on an the left lane 16 on which oncoming traffic has to be expected. The reduction of the minimum distance is indicated by double arrow 38.

Fig. 4 shows the car 6 and the second car 18 in the same position on the street 14 one above the other. The detection ranges 20, 21 of the cameras 2, 3 of the stereo camera system 1 are overlapping each other more far away from the stereo camera system 1 compared to the detection ranges 31, 33 of the cameras 28, 29, which cameras 28, 29 are arranged nearer to each other than the cameras 2, 3 of the stereo camera system 1 according to the present invention. As a result, the overall detection area 39 of the right camera 2 and the left camera 3, especially in a horizontal line H is higher than the overall detection area 40 of the cameras 28, 29 of the stereo camera system 25 of the second car 18. Fig. 4 shows a possible improvement respectively enlargement of the field of view as indicated by double arrow 41.

In the shown embodiment the right camera 2 and the left camera 3 can be arranged in the hardware element 4 at a distance of 1 m. This can lead to an improvement respectively reduction of the minimal distance 38 of approximately 6 m. Further, the field of view can be increased by approximately 23%, wherein a potential captured width 39 of the environment in the horizontal line can be 6 m instead of 4.8 m.

Fig. 5 shows a transparent windshield 5' for a vehicle, e.g. the car 6 shown in Figs. 3 and 4. The windshield 5' comprises a stereo camera system 1' which comprises a right camera 2' and a left camera 3' which are accommodated in an elongated hardware element 4' , wherein the right camera 2' and the left camera 3' are arranged in an upper-left corner 8' of the windshield 5' from the inside. In this position 8' both cameras 2', 3' are in a wiping area 10' which can be wiped by a left wiper 12' of the windshield 5'. The windshield 5' is mounted in a frame 13'.

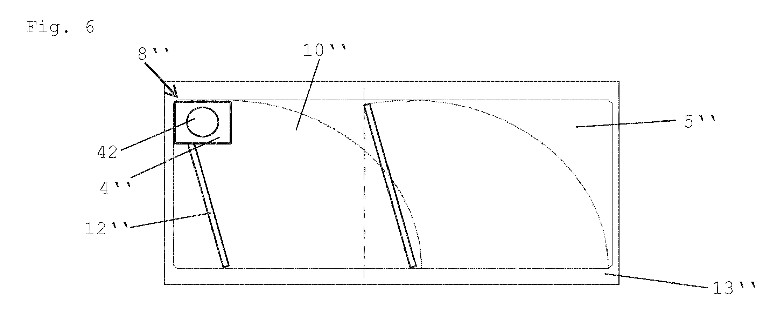

Fig. 6 shows a transparent windshield 5" for a vehicle, e.g. the car 6 shown in Figs. 3 and 4. The windshield 5' comprises a single camera 42 which is accommodated in a hardware element 4". The camera 42 is arranged in an upper-left corner 8" of the windshield 5" from the inside. In this position 8" the camera 42 is in a wiping area 10" which can be wiped by a left wiper 12" of the windshield 5". The windshield 5" is mounted in a frame 13".

### Reference signs

- 1, 1': stereo camera system
- 2, 2': right camera
- 3, 3': left camera
- 4, 4': hardware element
- 5, 5': windshield
- 6: car
- 7: upper central part of the windshield
- 8, 8': upper-left corner of the windshield
- 9, 10,:
- 10': wiping areas
- 11, 12,:
- 12': wipers
- 13, 13': frame
- 14: street
- 15: right lane
- 16: left lane
- 17: truck
- 18: car
- 19: right outer limit
- 20: detection range
- 21: right outer limit
- 22: detection range
- 23, 24: left outer limits
- 25: stereo camera system
- 26: windshield
- 27: upper central part of the windshield
- 28: right camera
- 29: left camera
- 30: right outer limit
- 31: detection range
- 32: right outer limit
- 33: detection range
- 34, 35: left outer limits
- 36, 37: minimum distances
- 38: reduction of minimum distance
- 39, 40: overall detection areas
- 41: enlargement of overall detection area
- 42: camera

## Claims

1. Stereo camera system (1) for a vehicle (6), the stereo camera system (1) comprising a right camera (2) and a left camera (3), wherein the right camera (2) and the left camera (3) are arranged at a distance (a) such that the right camera (2) can be arranged in an upper-central part (7) of a windshield (5) of the vehicle (6) and the left camera (3) can be positioned in an upper-left corner (8) of the windshield (5).

2. Stereo camera system (1) as per claim 1, wherein the right camera (2) and the left camera (3) are arranged at a distance (d) of 1 m.

3. Windshield (5) for a vehicle (6), the windshield (5) comprising a stereo camera system (1) as per claim 1 or 2, wherein the right camera (2) is arranged in an upper-central part (7) of the windshield (5) and the left camera (3) is positioned in an upper-left corner (8) of the windshield (5).

4. Vehicle (6) comprising a windshield (5) as per claim 3.

5. Windshield (5') for a vehicle (6), the windshield (5') comprising a stereo camera system (1') which comprises a right camera (2') and a left camera (3'), wherein the right camera (2') and the left camera (3') are arranged in an upper-left corner (8') of the windshield (5').

6. Windshield (5") for a vehicle (6), the windshield (5") comprising a camera (42), wherein the camera (42) is arranged in an upper-left corner (8") of the windshield (5").
